# EUROPEAN PATENT APPLICATION

(11) **EP 2 357 833 A2**
(43) Date of publication of application: **17.08.2011**
(21) Application number: 10194233.2
(22) Date of filing: 08.12.2010
(51) Int. Cl.: H04N 13/00

(54) **3D display device and method for correcting image thereof**

(30) Priority: 16.12.2009 KR 20090125323; 16.12.2009 KR 20090125332
(71) Applicant: SAMSUNG ELECTRONICS CO., LTD., Suwon-si Gyeonggi-do 442-742 (KR)
(72) Inventor: Bai, Young-jai, Gyeonggi-do (KR)
(74) Representative: Robinson, Ian Michael

(57) **Abstract**

A three dimensional (3D) display device (100) is provided. The 3D display device (100) includes a pre-processing unit (110) which generates a frame containing a left-eye image and a right-eye image, a correcting unit (123) which corrects the generated frame, a post-processing unit (130) which 3D-processes the corrected frame, and a control unit (150) which controls a display unit to display the 3D-processed frame.

## Description

### CROSS-REFERENCE TO RELATED APPLICATIONS

This application claims priority from Korean Patent Application No. 10-2009-0125323, filed December 16, 2009, and Korean Patent Application No. 10-2009-0125332, filed December 16, 2009, in the Korean Intellectual Property Office, the disclosures of which are incorporated herein by reference in their entireties.

### BACKGROUND

### 1. Field

Apparatuses and methods consistent with exemplary embodiments relate to displaying and correcting an image, and more particularly, to a three-dimensional (3D) image display device which corrects a generated frame, and a method for correcting image thereof.

### 2. Description of the Related Art

The recent advancement of the electronic technology has led rapid development in the related devices including home appliances such as television (TV) devices. TV technology particularly has seen a remarkable advancement in 3D television (3DTV) technology. 3DTV technology adds depth information to the existent two-dimensional (2D) mono images, producing illusion of depth, and therefore giving viewers dynamic and realistic feelings.

By applying the stereoscopic vision technology to the 2D images, the 3DTV technology produces additional information which gives viewers the feeling that they are actually standing or walking in the space created by the images.

Many large-scale fairs or exhibitions currently display 3D image exhibits, in which the 3D image technology captures the observer's attention to a great extent. The realistic experience provided by the 3D image technology may cause the viewers automatically put their hands out to touch a 3D image object or turn their bodies away to avoid from being hit by the 3D image.

The shutter glasses are widely used to help viewers to watch the 3D image. However, the shutter glasses have drawbacks. That is, if output frames have frequency below a reference value, viewers may experience an uncomfortable flickering phenomenon.

Another problem arises because the TV devices apply different methods to generate and process 2D and 3D images. Accordingly, some techniques applied to the 2D TV devices are not compatible with the 3D TV devices.

Specifically, a method of removing motion judder in the 2D image cannot be applied to the 3D TV device, if a 3D film image at a conventional rate of 24 frames/sec is reproduced as a 3D image at the rate of 30 frames/sec, or if a 2D film image at the rate of 24 frames/sec is converted into a 3D image at the rate of 30 frames/sec.

### SUMMARY

Exemplary embodiments address at least the above problems and/or disadvantages and other disadvantages not described above. Also, an exemplary embodiment is not required to overcome the disadvantages described above, and an exemplary embodiment may not overcome any of the problems described above.

Exemplary embodiments provide a 3D image display device capable of reducing flickering through a frequency conversion, and a method for correcting an image thereof.

Exemplary embodiments also provide a 3D image display device which performs a processing to locally remove a motion judder from a display screen, and a method for correcting an image thereof.

According to an aspect of an exemplary embodiment, there is provided a 3D display device, which may include a display unit which displays a 3D image, a pre-processing unit which generates a frame containing a left-eye image and a right-eye image, a correcting unit which corrects the generated frame, a post-processing unit which 3D-processes the corrected frame, and a control unit which controls the display unit to display the 3D-processed frame.

The correcting unit may include a frequency converting unit which converts a driving frequency of the generated frame to a predetermined frequency, if the driving frequency of the generated frame is determined to be lower than the predetermined frequency.

The predetermined frequency may be 60 Hz, the driving frequency of the frame generated at the pre-processing unit may be 50 Hz, and the driving frequency may be converted to 60 Hz at the frequency converting unit and output.

The post-processing unit may include a 3D processing unit which may separate the left-and right-eye images into separate frames, scale each of the separated left- and right-eye images to generate a first image and a second image, combine a left-side image of the first image and a left-side image of the second image to generate a third image, and combine a right-side image of the first image and a right-side image of the second image to generate a fourth image.

The post-processing unit may additionally include a frame rate control unit which may separate the third and fourth images into left and right images, and increase the driving frequency by inserting a same image with respect to the separated left and right images.

The post-processing unit may additionally include a timing control unit which may control a timing of the image output to the display unit by removing the inserted same image.

The frame rate control unit may include a first frame rate control unit which inserts a same image so that a left-side image of the third image and a right-side image of the third image are repeated twice each, and a second frame rate unit which inserts a same image so that a left-side image of the third image and a right-side image of the fourth image are repeated twice each.

The timing control unit may include a first timing control unit which controls a timing of the image output to the display by converting one of repetitive images output from the first frame rate control unit into a black image, and a second timing control unit which controls a timing of the image output to the display unit by converting one of repetitive images output from the second frame rate control unit into a black image.

The driving frequency input to the display unit may be 240 Hz.

The pre-processing unit may generate a frame containing a first area representing a left-eye image, a second area representing a right-eye image, and a boundary area between the left- and right-eye images, and the correcting unit may include a motion judder removing unit which performs processing for motion judder removal locally with respect to the generated frame.

The motion judder removing unit may perform the processing to remove motion judder with respect to the first and second areas.

The post-processing unit may include a 3D processing unit which separates the left- and right-eye images into separate frames, scales each of the separated left- and right-eye images to generate a first image and a second image, combines a left-side image of the first image and a left-side image of the second image to generate a third image, and combines a right-side image of the first image and a right-side image of the second image to generate a fourth image.

The post-processing unit may additionally include a frame rate control unit which separates the third and fourth images into a left image and a right image, and increases a driving frequency by inserting a same image with respect to the separated left and right images.

The post-processing unit may additionally include a timing control unit which controls a timing of the image output to the display unit by removing the inserted same image.

The frame rate control unit may include a first frame rate control unit which inserts a same image so that a left-side image of the third image and a right-side image of the third image are repeated twice each, and a second frame rate control unit which inserts a same image so that a left-side image of the fourth image and a right-side image of the fourth image are repeated twice each.

The timing control unit may include a first timing control unit which controls a timing of the image output to the display unit by converting one of repetitive images output from the first frame rate control unit into a black image, and a second timing control unit which controls a timing of the image output to the display unit by converting one of repetitive images output from the second frame rate control unit into a black image.

The driving frequency output from the pre-processing unit may be 60 Hz, and the driving frequency input to the display unit may be 240 Hz.

According to an aspect an exemplary embodiment, there is also provided a method for correcting an image of a 3D display device, which may include generating a frame containing a left-eye image and a right-eye image, correcting the generated frame, 3D-processing the corrected frame, and displaying, at the display unit, the 3D-processed frame.

The correcting may include converting a driving frequency of the generated frame to a predetermined frequency, if the driving frequency of the generated frame is determined to be lower than the predetermined frequency.

The predetermined frequency may be 60 Hz, and the converting may include converting the driving frequency of the generated frame from 50 Hz to 60 Hz.

The processing may include separating the left- and right-eye images into separate frames, scaling each of the separated left- and right-eye images to generate a first image and a second image, combining a left-side image of the first image and a left-side image of the second image to generate a third image, and combining a right-side image of the first image and a right-side image of the second image to generate a fourth image.

The processing may additionally include separating the third and fourth images into left and right images, and increasing the driving frequency by inserting a same image with respect to the separated left and right images.

The processing may additionally include controlling a timing of the image output to the display unit by removing the inserted same image.

The increasing may include first frame rate controlling, which inserts a same image so that a left-side image of the third image and a right-side image of the third image are repeated twice each, and second frame rate controlling, which inserts a same image so that a left-side image of the third image and a right-side image of the fourth image are repeated twice each.

The controlling the timing may include first timing controlling, which controls a timing of the image output to the display by converting one of repetitive images output from the first frame rate control unit into a black image, and second timing controlling, which controls a timing of the image output to the display unit by converting one of repetitive images output from the second frame rate control unit into a black image.

The driving frequency input to the display unit may be 240 Hz.

The generating may include generating a frame containing a first area representing a left-eye image, a second area representing a right-eye image, and a boundary area between the left- and right-eye images, and the correcting may include performing processing for motion judder removal locally with respect to the generated frame.

The performing processing for motion judder removal may include performing the processing to remove motion judder with respect to the first and second areas.

The processing may include: separating the left- and right-eye images into separate frames; scaling each of the separated left- and right-eye images to generate a first image and a second image; combining a left-side image of the first image and a left-side image of the second image to generate a third image; and combining a right-side image of the first image and a right-side image of the second image to generate a fourth image.

The processing may additionally include separating the third and fourth images into a left image and a right image, and increasing a driving frequency by inserting a same image with respect to the separated left and right images.

The processing may additionally include controlling a timing of the image output to the display unit by removing the inserted same image.

The increasing may include first frame rate controlling, which inserts a same image so that a left-side image of the third image and a right-side image of the third image are repeated twice each, and second frame rate controlling, which inserts a same image so that a left-side image of the fourth image and a right-side image of the fourth image are repeated twice each.

The controlling the timing may include first timing controlling, which controls a timing of the image output to the display unit by converting one of repetitive images output from the first frame rate control unit into a black image, and second timing controlling, which controls a timing of the image output to the display unit by converting one of repetitive images output from the second frame rate control unit into a black image.

The driving frequency of the generated frame may be 60 Hz, and the driving frequency input to the display unit may be 240 Hz.

### BRIEF DESCRIPTION OF THE DRAWINGS

The above and/or other aspects will be more apparent by describing certain exemplary embodiments with reference to the accompanying drawings, in which:

FIG. 1 is a view illustrating a 3D image display device according to an exemplary embodiment;

FIG. 2 is a view provided to explain a flickering phenomenon;

FIGS. 3A and 3B illustrate examples of an operation of a frequency converting unit;

FIGS. 4 to 9 are views provided to explain a method for reducing flickering according to an exemplary embodiment;

FIG. 10 is a flowchart illustrating a method for reducing flickering of a 3D image display device according to an exemplary embodiment;

FIG. 11 is a view illustrating an example of a frame output from a pre-processing unit according to an exemplary embodiment;

FIG. 12 is a view provided to explain an example of a judder processing operation at a motion judder removing unit; and

FIG. 13 is a flowchart illustrating a method for removing a motion judder of a 3D image display device according to an exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of an exemplary embodiment. However, exemplary embodiments can be practiced without those specifically defined matters.

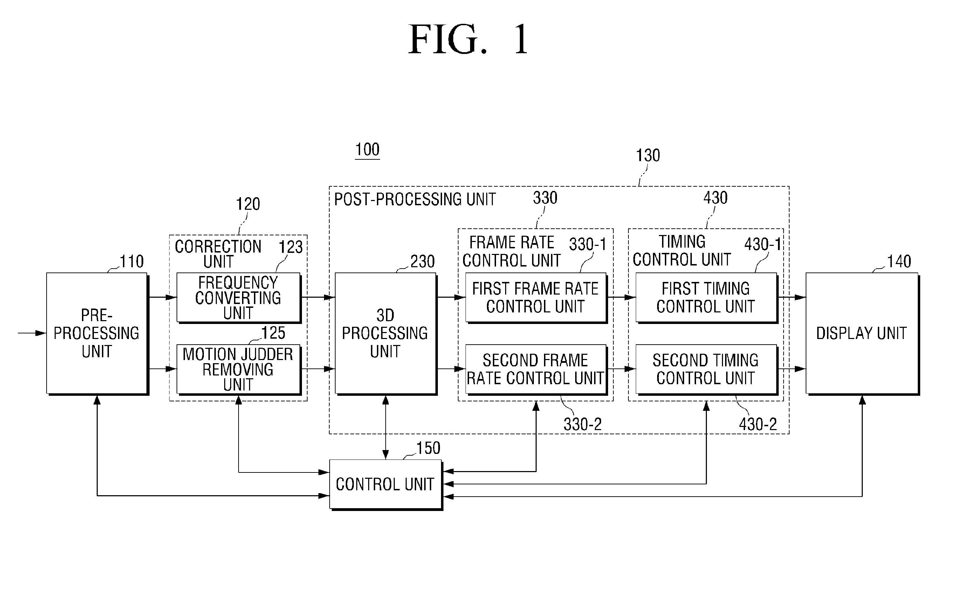

FIG. 1 is a view illustrating a 3D image display device according to an exemplary embodiment.

Referring to FIG. 1, the 3D image display device 100 may include a pre-processing unit 110, a correcting unit 120, a post-processing unit 130, a display unit 140, and a control unit 150. The correcting unit 120 may include a frequency converting unit 123 and a motion judder removing unit 125. The post-processing unit 130 may include a 3D processing unit 230, a frame rate control unit 330, and a timing control unit 430.

According to an exemplary embodiment, the display unit 140 displays a 3D image. The pre-processing unit 110 generates a frame which contains a left-eye image and a right-eye image. The correcting unit 120 corrects the generated frame, and the post-processing unit 130 3D-processes the corrected frame. The control unit 150 controls the display unit 140 to display the 3D-processed frame.

An example of preventing flickering by using the frequency converting unit 123 of the correcting unit 120, and an example of removing motion judder using the motion judder removing unit 125 of the correcting unit 120 are described below. Each of the described methods may be implemented together, and the order of these methods is changeable.

Referring to FIG. 1, the pre-processing unit 110 receives a broadcast signal from a broadcasting station, separates broadcast information, image signal and sound signal from the received broadcast signal, and carries out necessary processing for the separated image signal.

For example, the pre-processing unit 110 generates a frame which contains a left-eye image and a right-eye image.

The left-eye image may be a 2D image, and the right-eye image may be a 2D image added with depth information. Because the left-eye image and the right-eye image have different shapes to create disparity, the brain of a viewer perceives the left-eye image and the right-eye image as one 3D image when the viewer wears shutter glasses which are designed to view a 3D image.

The pre-processing unit 110 may process the generated frame so that the left-eye image and the right-eye image are displayed according to the side-by-side format. Alternatively, the pre-processing unit 110 may process the generated frame so that the left-eye image and the right-eye image are displayed according to the top and bottom format. Additionally, the pre-processing unit 110 may apply a variety of other formats.

If the side-by-side format is applied to the frame sized 1920 pixels in horizontal and 1080 lines in vertical directions, each of the left-eye image and the right-eye image may be 960 pixels in horizontal and 1080 lines in vertical directions.

The correcting unit 120 corrects the generated frame. For example, the correcting unit 120 may implement at least one of a frequency conversion and a motion judder removal.

If it is determined that the generated frame has a driving frequency lower than a predetermined frequency, the driving frequency of the generated frame is converted to the predetermined frequency.

Specifically, the frequency converting unit 123 may convert the driving frequency of the generated frame from 50 Hz to 60 Hz. As a result, the flickering, which is an undesirable irregular movement on the screen, is reduced.

The frequency converting unit 123 may include a determining unit (not illustrated) to determine whether the driving frequency of the generated frame is lower than the predetermined frequency. Alternatively, the determining unit (not illustrated) may be arranged between the pre-processing unit 110 and the frequency converting unit 123.

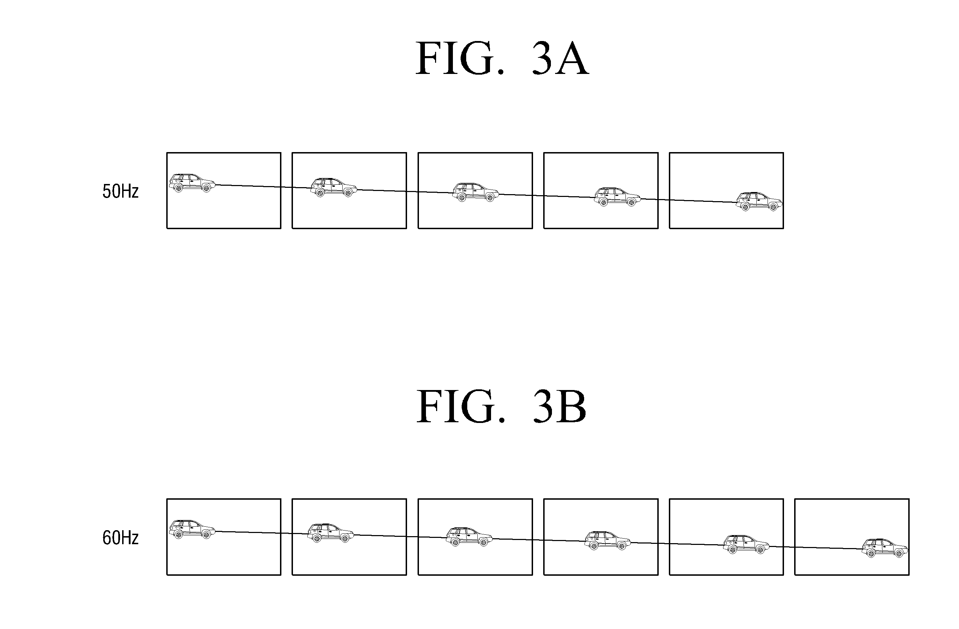

The operation of the frequency converting unit 123 is described below in detail with reference to FIGS. 3A and 3B.

The post-processing unit 130 3D-processes the frequency-converted frame. The post-processing unit 130 may include the 3D processing unit 230, the frame rate control unit 330, and the timing control unit 430.

The 3D processing unit 230 separates the left-eye image and the right-eye image into separate frames, scales each of the separated left-eye image and the right-eye image to generate first and second images, combines a left-side image of the first image and a left-side image of the second image to generate a third image, and combines a right-side image of the first image and a right-side image of the second image to generate a fourth image. The 3D processing unit 230 may be implemented as a single integrated circuit (IC).

The frame rate control unit 330 separates the third and fourth images into left- and right-side images, and increases the driving frequency by inserting the same image into the separated left-side image and right-side image.

The timing control unit 430 controls the inserted same image to control the timing of the image output to the display unit 140.

The display unit 140 displays the 3D image. The term image includes a sense of consecutive time flow, and therefore, the image at a specific time point may correspond to a frame.

The display unit 140 may be implemented as a liquid crystal display (LCD) panel, a light emitting diode (LED) panel, or a plasma display panel (PDP). For example, if the display unit 140 is implemented as the LCD panel or the LED panel, the driving frequency of 240 Hz is input to the display unit 140. As another example, if the display unit 140 is implemented as the PDP, the driving frequency of 120 Hz is input to the display unit 140.

The control unit 150 controls the overall operations of the respective components 110, 120, 130, and 140. The control unit 150 may control the display unit 140 to display the 3D-processed frame. Additionally, the control unit 150 may control driving of the glasses, when the viewer uses the shutter type of 3D glasses. The 3D image display device 100 according to an exemplary embodiment may be operated with the respective components of 110, 120, 130, and 140, while the control unit 150 may be disposed separately or not included.

The 3D image display device 100 according to an exemplary embodiment may additionally include a display panel driving unit (not illustrated) disposed between the timing control unit 430 and the display unit 140. Accordingly, the 3D image display device 100 may directly control the timing of the driving the LCD of the display panel of the display unit 140.

The 3D image display device 100 according to an exemplary embodiment may be implemented as a TV device or a monitor of a personal computer which is capable of generating, processing, and displaying a 3D image.

According to an exemplary embodiment, a display system may be provided, in which a settop box carries out the abovementioned processing, and the 3D image display device 100 displays the processed image.

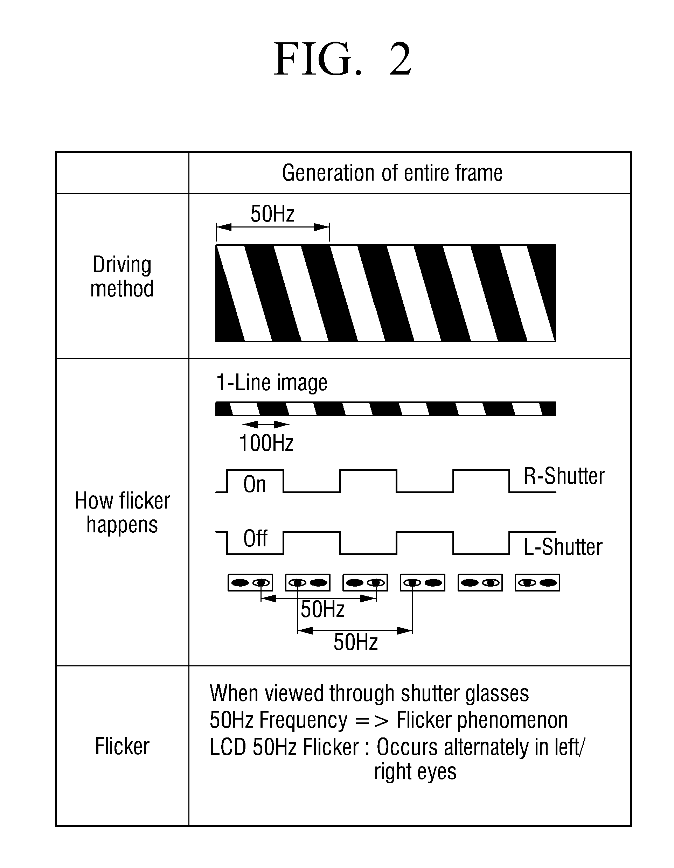

FIG. 2 is provided to explain flickering phenomenon. Referring to FIG. 2, if the driving frequency of the frame output from the pre-processing unit 110 is 50 Hz, the frame output from the post-processing unit 330 may have a driving frequency of 200 Hz. Accordingly, since the driving frequency of the frame input to the display unit 140 is 200 Hz, the viewer wearing the shutter glasses may experience the flickering, which is usually annoying irregular movement of image.

FIGS. 3A and 3B illustrate an example of operation of the frequency converting unit 123. Referring to FIGS. 3A and 3B, the frequency converting unit 123 increases the driving frequency of the frame input from the pre-processing unit 110.

As an example, if the driving frequency of the frame input from the pre-processing unit 110 is 50 Hz, the flickering phenomenon is reduced by increasing the driving frequency of the frame input to the post-processing unit 130 to 60 Hz.

That is, if five frames are consecutively input to the frequency converting unit 123, as illustrated in FIG. 3A, the five frames may be converted into six frames, as illustrated in FIG. 3B. The frequency converting unit 123 increases the driving frequency to process frames at the rate of 60 frames/sec instead of 50 frames/sec, and thus increases the driving frequency of the frame input to the display unit 140 from 200 Hz to 240 Hz. Since the flickering phenomenon is reduced, the user convenience is increased.

For example, if the driving frequency of the frame input from the pre-processing unit 110 is 50 Hz, the driving frequency of the frame input to the post-processing unit 130 may be converted to exceed 60 Hz. In this case, the frame rate control unit 330 controls the LCD of the panel of the display unit 140 to drive faster because the driving frequency of the frame is converted to exceed 240 Hz.

In the case explained above, the driving frequency of the frame can be converted from 50 Hz to 60 Hz with respect to all of the left-eye images and the right-eye images of the pre-processing unit 110.

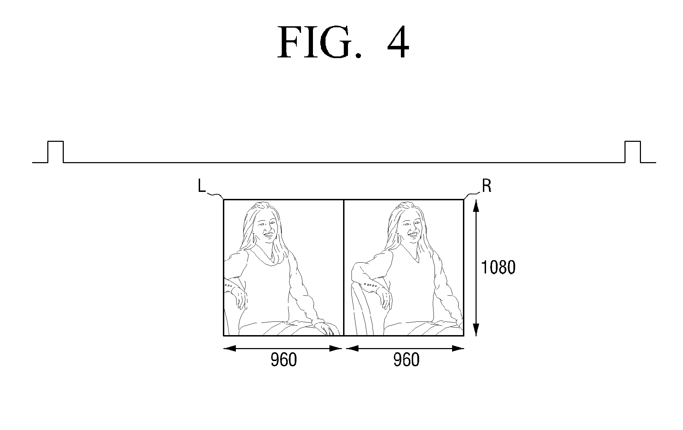

FIGS. 4 to 9 are views provided to explain a method for reducing flickering according to an exemplary embodiment.

FIG. 4 illustrates a frame input to the 3D processing unit 230. Although FIG. 4 representatively illustrates one frame, the driving frequency of the frame input to the 3D processing unit 230 is 60 Hz. Accordingly, in reality, 60 frames are repeated in one second.

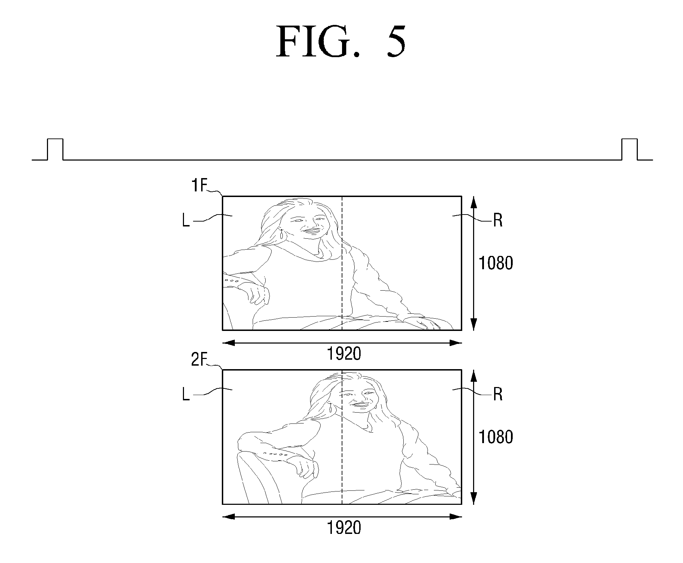

FIG. 5 illustrates a left/right segmentation and scaling operation implemented at the 3D processing unit 230.

Referring to FIG. 5, the 3D processing unit 230 segments a left-eye image (L) and a right-eye image (R). For example, each of the segmented left-eye image (L) and right-eye image (R) may be 960 pixels in horizontal and 1080 lines in vertical directions.

Next, the 3D processing unit 230 scales the segmented left-eye image (L) and right-eye image (R). For example, the 3D processing unit 230 may scale the horizontal size of the segmented left-eye image (L) to 1920 pixels to generate a first image (1 F), and scales the horizontal side of the segmented right-eye image (R) to 1920 pixels to generate a second image (2F).

As illustrated in FIG. 5, the first and second images (1 F, 2F) are different images, that is, the first and second images (1 F, 2F) have disparity.

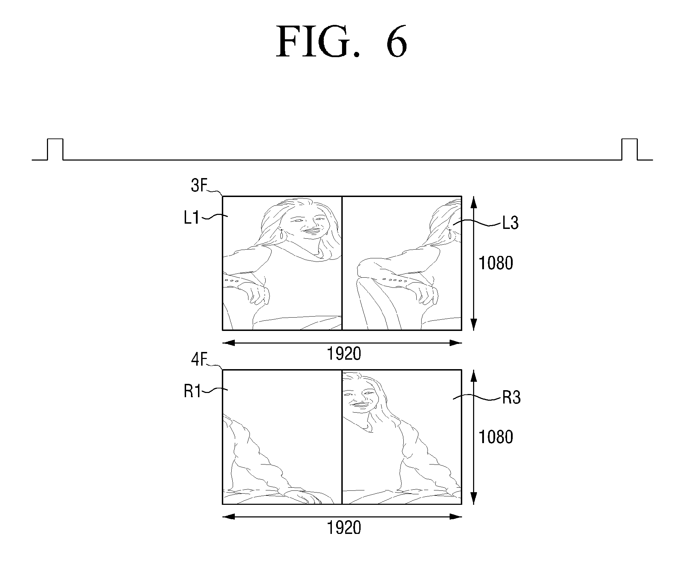

FIG. 6 illustrates a data swapping operation.

Referring to FIG. 6, the 3D processing unit 230 exchanges the right-side image (R) of the first image (1 F) and the left-side image (L) of the second image (2F) of FIG. 5. As a result, the left-side images (L) of the first and second images (1 F, 2F) make up a third image (3F), and the right-side images (R) of the first and second images (1 F, 2F) make up a fourth image (4F).

Although not illustrated, the 3D processing unit 130 may exchange the left-side image (L) of the first image (1 F) with the right-side image (R) of the second image (2F).

By swapping data, the first frame rate control unit 330-1 processes the left-side images of the first and second images (1 F, 2F), and the second frame rate control unit 330-2 processes the right-side images of the first and second images (1 F, 2F).

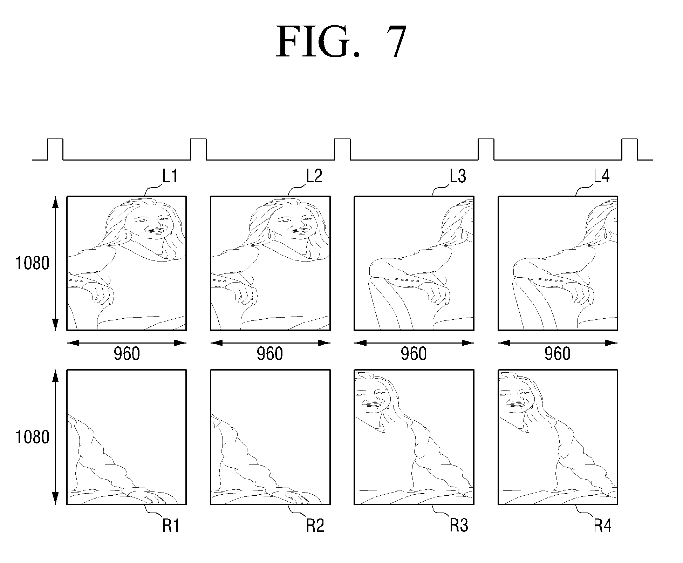

FIG. 7 illustrates a frame rate control operation.

Referring to FIG. 7, the first frame rate control unit 330-1 separates the left-side image (L1) and the right-side image (L3) of the third image (3F). The left-side image (L2) and the right-side image (L4) are inserted respectively after the left-side image (L1) and the right-side image (L3) so that the separated left-side image (L1) and the right-side image (L3) are repeated twice for each left-side image and right-side image of the third image (3F) illustrated in FIG. 6.

The second frame rate control unit 330-2 performs the operation similar to that of the first frame rate control unit 330-1.

For example, if the first frame rate control unit 330-1 controls the left-side image of each frame, the second frame rate control unit 330-2 may control the right-side image of each frame.

Since the first and second frame rate control units 330-1, 330-2 insert the left-side images (L2, L4) and the right-side images (R2, R4) respectively, the driving frequency of the frame is increased. If the frame rate control unit 330 increases the driving frequency, the control unit 150 may control the LCD of the panel of the display unit 140 to drive at a higher speed. As a result, flickering is reduced.

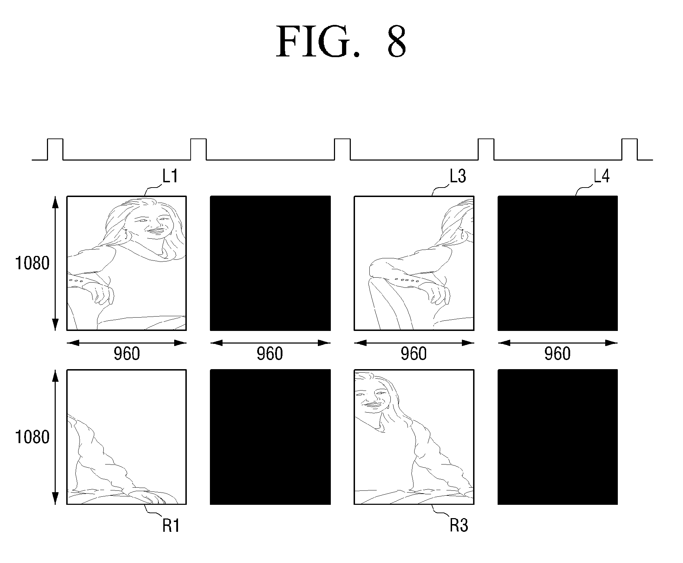

FIG. 8 illustrates a black image insertion (conversion) operation.

Referring to FIG. 8, the first timing control unit 430-1 removes the inserted left-side image (L2 or L4) from the repetitive left-side images (L1, L2 or L3, L4) output from the first frame rate control unit 330-1. A black image is inserted in place of the removed left-side image (L2 or L4) of the repetitive images (L1, L2, or L3, L4), or the removed left-side image (L2 or L4) is converted into a black image.

As a result, the first timing control unit 430-1 may output a left-side image (L1), a lack image, a left-side image (L3), and a black image in a sequence. The second timing control unit 430-2 may also output a right-side image (R1), a black image, a right-side image (R3), and a black image in a sequence.

Since the timing control unit 430 inserts black images, the crosstalk, which is generated due to the time delay of LCD, is prevented while the LCD panel of the display unit is controlled to be on or off.

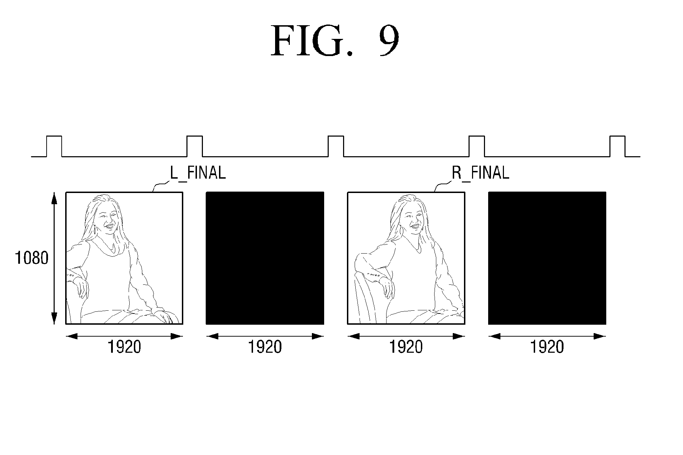

FIG. 9 illustrates the operation of generating the final frames at the timing control unit 430 to be output to the display unit.

Referring to FIG. 9, the timing control unit 430 combines the left-side image (L1) of the first timing control unit 430-1 and the right-side image (R1) of the second timing control unit 430-2 to generate a left-eye image (L_final). The timing control unit 430 also combines the left-side image (L3) of the first timing control unit 430-1 and the right-side image (R3) of the second timing control unit 430-2 to generate a right-eye image (R_final).

Accordingly, the display unit 140 displays the left-eye image (L_final) once in 1/60 second, and displays the right-eye image (R_final) in 1/60 second.

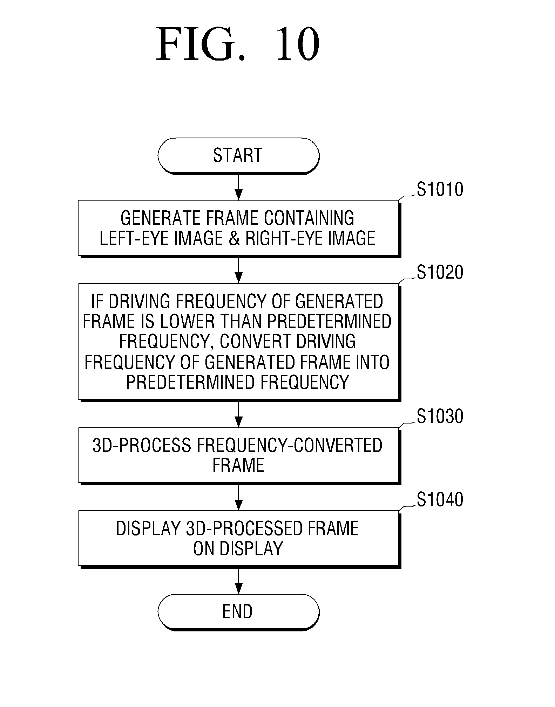

FIG. 10 is a flowchart illustrating a method for reducing flickering in a 3D image display device according to an exemplary embodiment.

Referring to FIG. 10, at operation S1010, the pre-processing unit 110 generates a frame containing a left-eye image and a right-eye image.

At operation S1020, if it is determined that the driving frequency of the generated frame is lower than a predetermined frequency, the frequency converting unit 123 converts the driving frequency of the generated frame to the predetermined frequency.

At operation S1030, the post-processing unit 130 3D-processes the frames with the converted frequency.

At operation S1040, the display unit 140 displays the 3D-processed frame.

At operation S1020, the driving frequency of the generated frame may be converted from 50 Hz to 60 Hz.

As a result, since the driving frequency of the frame to be input to the display unit 140 is changed from 200 Hz to 240 Hz, flickering is reduced.

An example of removing motion judder is explained below.

Since most of the functions illustrated in FIG. 1 are described above, the repetitive explanation of the same component or operation is omitted below for the sake of brevity.

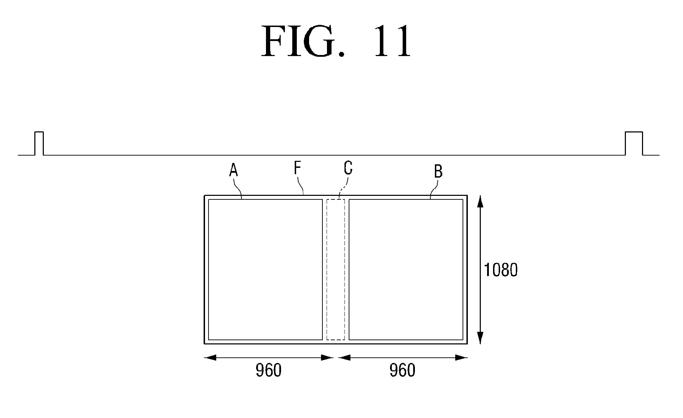

Referring to FIGS. 1 and 11, the pre-processing unit 110 generates a frame which contains a first area representing a left-eye image, a second area representing a right-eye image, and a boundary area between the left-eye image and the right-eye image.

The correcting unit 120 corrects the generated frame. For example, the correcting unit 120 may carry out at least one of the frequency conversion and the motion judder removal.

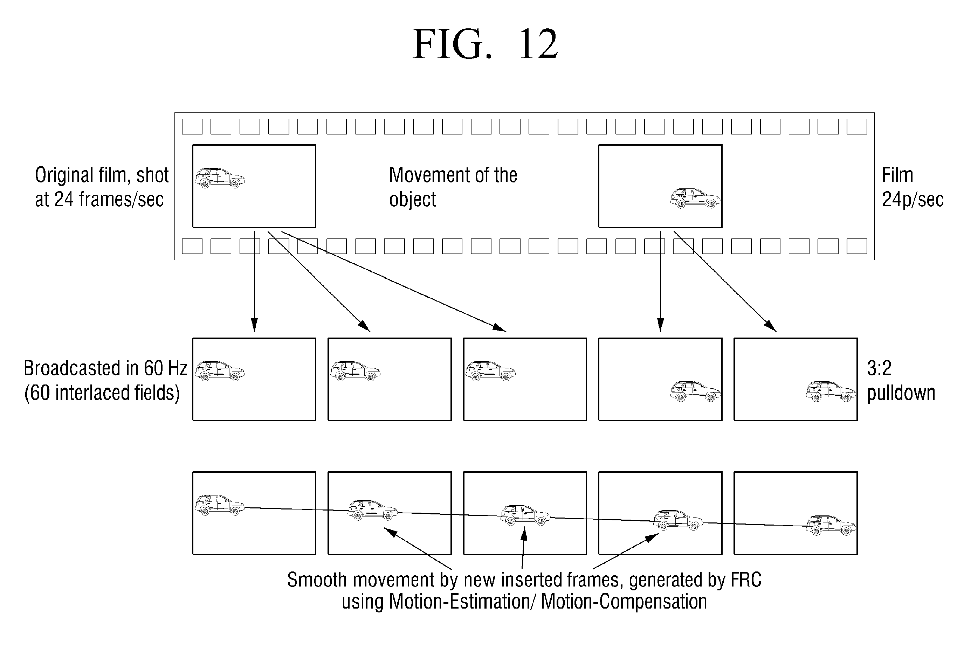

For example, the motion judder removing unit 125 may perform processing to locally remove motion judder from a frame received from the pre-processing unit 110. The motion judder refers to an artifact experienced while the images of the frames are replayed in which a subject on the display screen abruptly changes position, as described in greater detail below with reference to FIG. 12.

While it is possible to perform motion judder removal processing with respect to the first area representing the left-eye image and the second area representing the right-eye image, which carry images different from each other, the motion judder removal for the boundary area between the first and second areas may be omitted.

The post-processing unit 130 3D-processes the frame from which motion judder is locally removed. The post-processing unit 130 may include the 3D processing unit 230, the frame rate control unit 330, and the timing control unit 430.

The 3D processing unit 230 separates the left-eye image and the right-eye image into separate frames, scales the left-eye image and the right-eye image respectively to generate first and second images, combines a left-side image of the first image and a left-side image of the second image to generate a third image, and combines a right-side image of the first image and a right-side image of the second image to generate a fourth image. The 3D processing unit 230 may be implemented as an IC.

The 3D processing unit 230 may convert a 3D film image at the rate of 24 frames/sec into 3D image at the rate of 30 frames/sec, or convert the 2D film image at the rate of 24 frames/sec into 3D image at the rate of 30 frames/sec. The detailed explanation of the known rate-converting process is omitted for the sake of brevity.

The frame rate control unit 330 divides the third and fourth images into left and right images, and increases the driving frequency by inserting the same image into the divided left and right images.

The timing control unit 430 controls the timing of the image output to the display unit 140 by removing the inserted same image.

The display unit 140 displays the 3D image. Herein, the term image includes a sense of consecutive time flow, and therefore, the image at a specific time point may correspond to a frame.

The control unit 150 controls the overall operations of the respective components 110, 120, 130, and 140.

According to an aspect of an exemplary embodiment, the pre-processing unit 110 of the 3D image display device 100 may output frames with the driving frequency of 60 Hz, and the frame rate control unit 330 of the post-processing unit 130 may convert the driving frequency to 240 Hz. Accordingly, the driving frequency of 240 Hz is input to the display unit. Alternatively, if the display unit 140 is implemented as a PDP, the frame rate control unit 330 may convert the driving frequency to 120 Hz, in which case the driving frequency of 120 Hz is input into the display unit 140.

FIG. 11 is a view illustrating an example of the frame output from the pre-processing unit according to an exemplary embodiment.

Referring to FIG. 11, a frame (F) may include a first area (A) representing a left-eye image, a second area (B) representing a right-eye image, and a boundary area (C) between the first and second areas (A, B).

The boundary area (C) may be separate from the first and second areas (A, B). For example, the boundary area (C) may be made up of pixels in the same column.

Alternatively, the boundary area (C) may include pixels in the same vertical direction along the right-most side of the left-eye image, or pixels in the same vertical direction along the left-most side of the right-eye image, or a combination of the pixels in the same vertical direction along the right-most side of the left-eye image and the pixels in the same vertical direction along the left-most side of the right-eye image, in which case the boundary area (C) may overlap at least one of the first and second areas (A, B).

Although the boundary area (C) may include pixels of a plurality of different columns, when the boundary area (C) includes the pixels in the same column, a higher-quality image may be output.

Furthermore, although FIG. 11 illustrates a vertically-formed boundary area (C), this is only for illustrative purpose. Accordingly, the boundary area (C) may be formed in a horizontal direction if applicable.

FIG. 12 is a view provided to explain an example of processing motion judder at the motion judder removing unit.

Referring to FIG. 12, one way to reproduce a film image at a rate of 24 frames/sec through the 3D image display device 100 may be the 3:2 pulldown by which the current frame is repeated three times, and the following frame is repeated twice to generate an image at the rate of 60 frames/sec.

In the example described above, although the car keeps moving to the right in real situation, it does not move when the current frame is reproduced three times, and then suddenly moves as the next frame is reproduced. This is when the viewer experiences the motion judder. In order to prevent the motion judder from happening, interpolation may be performed using the dummy image.

For example, the entire area of the display screen may be interpolated to prevent motion judder if the display device 100 is replaying a conventional 2D image. However, as illustrated in FIG. 12, if the display device 100 is replaying a 3D image, considering that the left-eye image and the right-eye image (A, B) are different from each other, processing between the left-eye image and the right-eye image (A, B) for the motion judder removal may cause problems such as image degradation or even errors in reproducing the image.

Accordingly, the 3D image display device 100 according to an exemplary embodiment may perform processing (that is, interpolation) for motion judder removal with respect to the first and second areas (A, B) by the motion judder removing unit 125. In this processing, the processing the boundary area (C) between the first and second areas (A, B) may be omitted.

As another example, processing for motion judder removal with respect to the entire area of the frame may be performed before the frame is input to the display unit 140.

The method for removing motion judder according to an exemplary embodiment is described below with reference to FIGS. 4 to 9.

FIG. 4 illustrates a frame input to the 3D processing unit 230. Although FIG. 4 representatively illustrates one frame, the number of frames repeated per second is determined according to the driving frequency of the frame. For example, if driving frequency is 60 Hz, 60 frames are repeated per second.

FIG. 5 illustrates an L/R separation and scaling operation performed at the 3D processing unit 230.

Referring to FIG. 5, the 3D processing unit 230 separates the left-eye image (L) and the right-eye image (R). For example, each of the separated left-eye image and the right-eye image (L, R) may be 960 pixels in horizontal and 1080 lines in vertical directions.

The 3D processing unit 230 scales the separated left-eye image and the right-eye image (L, R). For example, the 3D processing unit 230 may scale the separated left-eye image (L) to 1920 pixels in horizontal direction to generate a first image (1F), and scale the right-eye image to 1920 pixels in horizontal direction to generate a second image (2F).

As illustrated in FIG. 5, the first and second images (1F, 2F) are different from each other, that is, the first and second images (1 F, 2F) have disparity.

FIG. 6 illustrates data swapping operation.

Referring to FIG. 6, the 3D processing unit 230 exchanges the right-side image (R) of the first image (1 F) and the left-side image (L) of the second image (2F). As a result, the left-side images (L) of the first and second images (1 F, 2F) make up a third image (3F), and the right-side images (R) of the first and second images (1 F, 2F) make up a fourth image (4F).

Note that other alternatives are possible. For example, the 3D processing unit 130 may exchange the left-side image (L) of the first image (1 F) and the right-side image (R) of the second image (2F).

By swapping data, the first frame rate control unit 330-1 processes the left-side images of the first and second images (1 F, 2F), and the second frame rate control unit 330-2 processes the right-side images of the first and second images (1 F, 2F).

FIG. 7 illustrates frame rate controlling operation.

Referring to FIG. 7, the first frame rate control unit 330-1 separates the left-side image (L1) and right-side image (L3) from the third image (3F), and inserts the left-eye image (L2) after the left-eye image (L1) and inserts the right-side image (L4) after the left-eye image (L4) so that the left-side image and right-side image are repeated twice each.

The second frame rate control unit 330-2 performs the operation similar to that of the first frame rate control unit 330-1.

For example, if the first frame rate control unit 330-1 controls the left-side image of each frame, the second frame rate control unit 330-2 may control the right-side image of the frame.

The first and second frame rate control units 330-1, 330-2 insert the left-side images (L2, L4) and the right-side images (R2, R4), to increase the driving frequency of the frame. If the frame rate control unit 330 increases the driving frequency of the frame, the control unit 150 may control the LCD of the panel of the display unit 140 to drive at a higher speed.

FIG. 8 illustrates the operation of inserting (or converting) black images.

Referring to FIG. 8, the first timing control unit 430-1 removes the inserted left-side image (L2 or L4) of the repetitive left-side images (L1, L2 or L3, L4) output from the first frame rate control unit 330-1. The first timing control unit 430-1 inserts a black image in place of the removed left-side image (L2 or L4) of the repetitive left-side images (L1, L2 or L3, L4), or converts the removed left-side image (L2 or L4) into a black image.

As a result, the first timing control unit 430-1 outputs a left-side image (L1), a black image, a left-side image (L3), and a black image in a sequence. The second timing control unit 430-2 outputs a right-side image (R1), a black image, a right-side image (R3), and a black image in a sequence.

Since the timing control unit 430 inserts black images, the crosstalk, which is generated due to the time delay of LCD, is prevented while the LCD panel of the display unit 140 is controlled to be on or off.

FIG. 9 illustrates the operation of generating the final frames at the timing control unit 430 to be output to the display unit 140.

Referring to FIG. 9, the timing control unit 430 combines the left-side image (L1) of the first timing control unit 430-1 and the right-side image (R1) of the second timing control unit 430-2 to generate a left-eye image (L_final). The timing control unit 430 also combines the left-side image (L3) of the first timing control unit 430-1 and the right-side image (R3) of the second timing control unit 430-2 to generate a right-eye image (R_final).

Accordingly, the display unit 140 displays the left-eye image (L_final) once in 1/60 second, and displays the right-eye image (R_final) in 1/60 second.

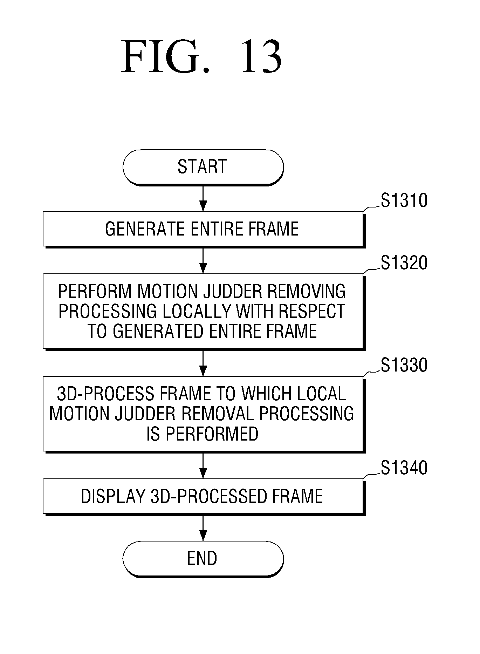

FIG. 13 is a flowchart illustrating a method for removing motion judder in a 3D image display device according to an exemplary embodiment.

Referring to FIG. 13, at operation S1310, the pre-processing unit 110 generates an entire frame which contains a first area representing a left-eye image, a second area representing a right-eye image, and a boundary area between the left-eye image and the right-eye image.

At operation S1320, the motion judder removing unit 125 performs processing to locally remove motion judder from the generated frame.

At operation S1330, the post-processing unit 130 3D-processes the frame from which motion judder is locally removed.

At operation S1340, the display unit 140 displays the 3D-processed frame.

The operation S1320 may include carrying out processing to remove motion judder with respect to the first and second areas.

As described above, a possible image degradation or erroneous signal processing due to motion judder removal with respect to the boundary area between the first and second areas can be prevented.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A three dimensional (3D) display device, comprising:
a display unit which displays a 3D image;
a pre-processing unit which generates a frame containing a left-eye image and a right-eye image;
a correcting unit which corrects the generated frame;
a post-processing unit which 3D-processes the corrected frame; and
a control unit which controls the display unit to display the 3D-processed frame.

2. The 3D display device of claim 1, wherein the correcting unit comprises a frequency converting unit which converts a driving frequency of the generated frame to a predetermined frequency, if the driving frequency of the generated frame is determined to be lower than the predetermined frequency.

3. The 3D display device of claim 2, wherein the predetermined frequency is 60Hz, the driving frequency of the frame generated at the pre-processing unit is 50Hz, and the driving frequency is converted to 60Hz at the frequency converting unit and output.

4. The 3D display device of claim 2, wherein the post-processing unit comprises:
a 3D processing unit which separates the left- and right-eye images into separate frames, scales each of the separated left- and right-eye images to generate a first image and a second image, combines a left-side image of the first image and a left-side image of the second image to generate a third image, and combines a right-side image of the first image and a right-side image of the second image to generate a fourth image;
a frame rate control unit which separates the third and fourth images into left and right images, and increases the driving frequency by inserting a same image with respect to the separated left and right images; and
a timing control unit which controls a timing of the image output to the display unit by removing the inserted same image.

5. The 3D display device of claim 4, wherein the frame rate control unit comprises:
a first frame rate control unit which inserts the same image so that a left-side image of the third image and a right-side image of the third image are repeated two times each; and
a second frame rate unit which inserts the same image so that a left-side image of the fourth image and a right-side image of the fourth image are repeated two times each.

6. The 3D display device of claim 5, wherein the timing control unit comprises:
a first timing control unit which controls the timing of the image output to the display unit by converting one of repetitive images output from the first frame rate control unit into a black image; and
a second timing control unit which controls the timing of the image output to the display unit by converting one of repetitive images output from the second frame rate control unit into the black image.

7. The 3D display device of claim 1, wherein
the pre-processing unit generates a frame containing a first area representing a left-eye image, a second area representing a right-eye image, and a boundary area between the left- and right-eye images, and
the correcting unit comprises a motion judder removing unit which performs processing for motion judder removal locally with respect to the generated frame.

8. The 3D display device of claim 7, wherein the motion judder removing unit performs the processing to remove motion judder with respect to the first and second areas.

9. The 3D display device of claim 7, wherein the post-processing unit comprises:
a 3D processing unit which separates the left- and right-eye images into separate frames, scales each of the separated left- and right-eye images to generate a first image and a second image, combines a left-side image of the first image and a left-side image of the second image to generate a third image, and combines a right-side image of the first image and a right-side image of the second image to generate a fourth image;
a frame rate control unit which separates the third and fourth images into a left image and a right image, and increases a driving frequency by inserting a same image with respect to the separated left and right images; and
a timing control unit which controls a timing of the image output to the display unit by removing the inserted same image.

10. The 3D display device of claim 9, wherein the frame rate control unit comprises:
a first frame rate control unit which inserts the same image so that a left-side image of the third image and a right-side image of the third image are repeated two times each; and
a second frame rate control unit which inserts the same image so that a left-side image of the fourth image and a right-side image of the fourth image are repeated two times each.

11. The 3D display device of claim 10, wherein the timing control unit comprises:
a first timing control unit which controls the timing of the image output to the display unit by converting one of repetitive images output from the first frame rate control unit into a black image; and
a second timing control unit which controls the timing of the image output to the display unit by converting one of repetitive images output from the second frame rate control unit into the black image.

12. The 3D display device of claim 7, wherein the driving frequency output from the pre-processing unit is 60Hz, and the driving frequency input to the display unit is 240Hz.

13. A method for correcting an image of a three dimensional (3D) display device, the method comprising:
generating a frame containing a left-eye image and a right-eye image;
correcting the generated frame;
3D-processing the corrected frame; and
displaying, at a display unit, the 3D-processed frame.

14. The method of claim 13, wherein the correcting comprises converting a driving frequency of the generated frame to a predetermined frequency, if the driving frequency of the generated frame is determined to be lower than the predetermined frequency.

15. The method of claim 13, wherein
the generating comprises generating a frame containing a first area representing a left-eye image, a second area representing a right-eye image, and a boundary area between the left- and right-eye images, and
the correcting comprises performing processing for motion judder removal locally with respect to the generated frame.
